Europäisches Patentamt

European Patent Office

Office européen des brevets

(19)

(11) Veröffentlichungsnummer : **0 195 899**
**B1**

(12) **EUROPÄISCHE PATENTSCHRIFT**

(45) Veröffentlichungstag der Patentschrift :
**30.11.88**

(21) Anmeldenummer : **86101347.2**

(22) Anmeldetag : **03.02.86**

(51) Int. Cl.⁴ : **C 08 G 18/65, C 08 G 18/08, C 08 L 75/00, B 29 C 47/00, B 29 C 43/00**

(54) **Verfahren zur Herstellung matter, nichtblockender, dünnwandiger Formkörper aus linearen, thermoplastischen, Polyaddukt-haltigen Polyurethanelastomeren und ihre Verwendung.**

(30) Priorität : **12.02.85 DE 3504671**

(43) Veröffentlichungstag der Anmeldung :
**01.10.86 Patentblatt 86/40**

(45) Bekanntmachung des Hinweises auf die Patenterteilung : **30.11.88 Patentblatt 88/48**

(84) Benannte Vertragsstaaten :
**AT BE CH DE FR GB IT LI NL SE**

(56) Entgegenhaltungen :
**DE-A- 1 964 834**
**DE-A- 2 519 004**
**FR-A- 2 331 579**

(73) Patentinhaber : **BAYER AG**
**Konzernverwaltung RP Patentabteilung**
**D-5090 Leverkusen 1 Bayerwerk (DE)**

(72) Erfinder : **Niederdellmann, Georg, Dr.**
**Heinestrasse 6**
**D-4047 Dormagen 1 (DE)**
Erfinder : **Goyert, Wilhelm, Dr.**
**Haberstrasse 48**
**D-5909 Leverkusen 1 (DE)**
Erfinder : **Quiring, Bernd, Dr.**
**Albrecht-Haushofer-Strasse 2**
**D-5090 Leverkusen 1 (DE)**
Erfinder : **Wagner, Hans, Dr.**
**Tizianstrasse 13**
**D-4047 Dormagen 1 (DE)**

EP 0 195 899 B1

**0 195 899**

**Beschreibung**

Die Erfindung betrifft ein Verfahren zur Herstellung von matten, nichtblockenden, dünnwandigen Formkörpern, Folien oder Schläuchen aus im wesentlichen linear aufgebauten, thermoplastischen Polyurethanelastomeren, welche feinteilige, hochschmelzende Polyaddukte in disperser Form enthalten, sowie die Verwendung derartiger dünnwandiger Formkörper, insbesondere Folien, zur Hinterschäumung mit Polyurethanschaumstoff-bildenden Reaktionsgemischen, wobei besonders gut haftende Verbunde zwischen den PU-Schaumstoffen und den dünnwandigen Formkörpern entstehen.

Thermoplastische Polyurethanelastomere besitzen aufgrund der Kombination hochwertiger mechanischer Eigenschaften und guter chemischer Beständigkeit und wegen der vorteilhaften und kostengünstigen thermoplastischen Verarbeitbarkeit seit langem technische Bedeutung (vgl. Becker/Braun, Kunststoff-Handbuch, Band 7 ; Polyurethane, Carl Hanser Verlag, München-Wien 1983, Seite 428 bis 440). Bei der thermoplastischen Verarbeitung unvernetzter Polyurethane, vornehmlich bei weichen Typen mit Shore-A-Härten unter 95, treten jedoch bei der Herstellung dünnwandiger Formkörper Schwierigkeiten bei der Entformung infolge starken Blockens und Klebens auf. Dies betrifft besonders die Herstellung von Folien, dünnwandigen Schäuchen und Formkörpern durch Extrudieren, Kalandrieren oder Blasverformen linearer, thermoplastischer PU-Elastomerer (TPU). Die starke Oberflächenblockigkeit weicher TPU-Folien schränkt darüber hinaus auch ihre Anwendungsmöglichkeiten häufig stark ein.

Die übliche Mitverwendung sogenannter innerer Trennmittel, z. B. von Stearylaminen, Stearylurethanen oder Stearylharnstoff, bietet ebensowenig eine befriedigende Problemlösung wie der gelegentlich praktizierte Zusatz anorganischer Antiblockmittel, z. B. Kreide, Talkum, Diatomeenerden und dergleichen, wobei letztere Füllstoffe zudem im allgemeinen zu einer Verschlechterung der Eigenschaften der TPU führen (z. B. Verschlechterung der Hydrolysenbeständigkeit und Auftreten von Verarbeitungsstörungen wie Blasenbildung an der Oberfläche durch die den Füllstoffen anhaftende Feuchtigkeit) bzw. wobei die inneren Trennmittel bei der hohen Verarbeitungstemperatur schmelzen und gegebenenfalls bei der notwendig hohen Konzentration aus den gebildeten Formkörpern auswandern und insbesondere zu Schwierigkeiten beim Verschweißen oder Verkleben von TPU-Folien oder bei der Hinterschäumung führen.

Aufgabe der vorliegenden Erfindung war die Herstellung dünnwandiger Formkörper mit Wandstärken unter 2 mm, vorzugsweise zwischen 5 $\mu$m und 500 $\mu$m, insbesondere zwischen 20 $\mu$m und 200 $\mu$m, durch Extrudieren, Kalandrieren oder Blasverformen im wesentlichen linearer, thermoplastischer Polyurethane, welche die bekannten Nachteile weicher, thermoplastischer Polyurethane nicht aufweisen und eine sich schnell verfestigende, sich gut vom Werkzeug trennende Schmelze bilden und zu matten, homogenen, dünnwandigen Formkörpern, z. B. Folien, Filmen oder Schläuchen führen, welche eine trockene, nichtblockende Oberfläche aufweisen und somit direkt weiterverarbeitbar, z. B. als Filme oder Schläuche direkt aufrollbar sind. Weiterhin sollten dünnwandige Formkörper, insbesondere Folien oder Schläuche zur Verfügung gestellt werden, welche einerseits gegeneinander nichtblockend und nicht klebend wirken, andererseits jedoch mit auf ihrer Oberfläche aufschäumenden Polyurethanschaumstoffsystemen eine gute Verbindung eingehen und daher hohe Trennarbeiten (gute Haftung) zwischen Folie und Schaumstoffsystem zeigen.

Die Lösung dieser Aufgabe gelingt in überraschender Weise durch die Verwendung im wesentlichen linearer thermoplastischer Polyurethane, welche ausgewählte, hochschmelzende Polyisocyanat-Polyadditionsprodukte (« Polyaddukte ») in relativ geringen Mengen dispergiert enthalten, die auch nach der Verarbeitung in feindispergiertem Zustand in der Polyurethanelastomermatrix verbleiben.

Gegenstand der Erfindung ist somit ein Verfahren zur Herstellung von matten, nichtblockenden, dünnwandigen Formkörpern, Folien oder Schläuchen aus Polyurethanelastomeren auf Basis von

A) Dispersionen, welche in
   Aa) Verbindungen mit mehreren gegenüber Isocyanat reaktiven Gruppen mit Zerewitinoff-aktiven H-Atomen und einem Molekulargewicht von 400 bis 10000 sowie Schmelzpunkten unter 60 °C,
   Ab) höhermolekulare, hochschmelzende Polyisocyanat-Polyadditionsprodukte dispergiert enthalten,
B) zwei Zerewitinoff-aktive Wasserstoffatome aufweisenden Kettenverlängerungsmitteln mit einem Molekulargewicht von 18 bis 399,
   C) Diisocyanaten, sowie
   D) gegebenenfalls Aktivatoren, Stabilisatoren, Gleitmitteln und weiteren, an sich bekannten Zusatzstoffen,
in welchem man
   I. thermoplastisch verarbeitbare Polyurethanelastomere mit im wesentlichen linearem Aufbau, bei denen das molare Verhältnis von Isocyanatgruppen zur Summe aller Zerewitinoff-aktive Wasserstoffatome aufweisenden Gruppen 0,95 bis 1,05, vorzugsweise 0,95 bis 1,03 und insbesondere 0,95 bis 1,0 beträgt, einsetzt, bei denen
   II. als Komponente Ab) hochschmelzende Polyisocyanat-Polyadditionsprodukte aus
   $\alpha$) mindestens zwei Zerewitinoffaktive Wasserstoffatome aufweisenden Verbindungen vom Mole-

2

kulargewicht 18 bis 399, vorzugsweise Wasser oder Di- und/oder Polyaminen, und

β) organischen Di- und/oder Polyisocyanaten, vorzugsweise mit Molekulargewichten unter 400, im Molverhältnis NCO/aktivem Wasserstoff von 0,8 : 1 bis 1,3 : 1, vorzugsweise 0,85 : 1 bis 1,1 : 1, insbesondere 0,95 : 1 bis 1,1, in feinteiliger Dispersion mit einer mittleren Teilchengröße von 0,01 bis 25 μm, vorzugsweise 0,1 bis 5 μm, insbesondere 0,1 bis 1,5 μm, in den höhermolekularen, bifunktionellen Verbindungen Aa) enthalten sind und wobei die dispergierten Polyadditionsprodukte Ab) als solche Schmelzpunkte > 220 °C, vorzugsweise > 260° aufweisen, ihre Dispersion in der Komponente Aa) mindestens bis 15 °C, vorzugsweise mindestens bis 30 °C oberhalb der Verarbeitungstemperatur der Polyurethanelastomeren, d. h. vorzugsweise bis mindestens 240 °C, ohne sich zu zersetzen oder zu lösen, stabil und feinteilig verteilt bleibt, in einer Menge der Polyaddukte Ab) von 0,66 bis 15 Gew.-%, vorzugsweise 1 bis 10 Gew.-%, insbesondere 2 bis 6 Gew.-%, bezogen auf das polyaddukt-haltige Polyurethanelastomere, verwendet und

III. die Elastomeren nach dem Extrusions-, Blasfolien- oder Kalandrierverfahren bei Verarbeitungstemperaturen von oberhalb 110 °C, vorzugsweise 110 bis 230 °C, insbesondere 175 bis 210 °C, in dünnwandige, matte Formkörper, Folien oder Schläuche mit Wandstärken unter 2 mm, vorzugsweise von 5 μm bis 500 μm, besonders bevorzugt von 20 bis 200 μm, unter feinteiliger, homogener Verteilung der Polyaddukte Ab) innerhalb der dünnwandigen Formkörper, überführt.

Bevorzugt ist bei den Polyaddukten Ab) mindestens eine der Komponenten, d. h. entweder das Diisocyanat β) oder das Kettenverlängerungsmittel bzw. der Vernetzer α) symmetrisch aufgebaut.

Weiterer Erfindungsgegenstand ist die Verwendung der erfindungsgemäß zugänglichen, nichtblockenden, matten, dünnwandigen Formkörper, Folien und Schläuche zur Herstellung von Polyurethanschaumstoff-Verbundkörpern, welche eine ausgezeichnete Trennfestigkeit zwischen Wand und Schaumstoff aufweisen und auch leicht thermisch verschweißbar oder verklebbar sind.

Die Herstellung von Dispersionen A) aus höhermolekularen, difunktionellen Verbindungen Aa) und höherschmelzenden Polyaddukten Ab) auf Polyisocyanatbasis kann nach an sich bekannter Weise erfolgen. Gemäß DE-AS 1 260 142 können derartige Dispersionen hergestellt werden, indem man eine Polyaminkomponente (z. B. Diamine oder Hydrazin) in einem höhermolekularen Polyetherdiol gelöst vorlegt und das Diisocyanat bei Raumtemperatur eintropft. Bei der Herstellung von Dispersionspolyolen im Sinne der vorliegenden Erfindung empfiehlt sich auch die Durchführung der genannten Verfahren in Gegenwart von Lösungsmitteln, z. B. Aceton, Methylethylketon oder Tetrahydrofuran, die nach beendeter Umsetzung destillativ entfernt werden.

Gemäß den DE-OSen 2 550 796 und 2 550 797 können stabile Dispersionen von Polyaddukten in hydroxylgruppenaufweisenden Verbindungen als Dispersionsmittel auch mit niedrigerer Viskosität erhalten werden, wenn man die Umsetzung von Polyisocyanaten mit aminofunktionellen Verbindungen in Gegenwart von geringeren Mengen an Wasser durchführt. Nach der Lehre der DE-OSen 2 513 815, 2 550 833 und 2 550 862 lassen sich relativ niedrigviskose Dispersionen von Polyharnstoffen und/oder Polyhydrazodicarbonamiden in hydroxylgruppenaufweisenden, höhermolekularen und gegebenenfalls auch niedermolekularen Verbindungen herstellen, indem man die Polyadditionsreaktion kontinuierlich in Durchflußmischern ablaufen läßt. Dieses Verfahren eignet sich auch in besonderer Weise zur Herstellung von Dispersionen A) im Sinne der vorliegenden Erfindung.

Die Verwendung derartiger Polyharnstoff- und/oder Polyhydrazodicarbonamid-dispersionen in Polyethern mit 2 bis 8 Hydroxylgruppen zur Herstellung von Polyurethanschaumstoffen mit verbesserten mechanischen Eigenschaften wird in den DE-OSen 2 513 816 und 2 519 004 beschrieben.

Die deutsche Offenlegungsschrift 1 769 869 beschreibt die Verwendung von Polyharnstoff- oder Polyhydrazodicarbonamiddispersionen in vorzugsweise Polyestern zur Herstellung vernetzter Polyurethanelastomerer mit verbesserter Hydrolysenstabilität, die vorzugsweise nach dem Reaktionsgießverfahren, sowie gegebenenfalls durch Spritzgießen, zu dickwandigen Formkörpern, z. B. Dichtungsmaterialien, Besohlungsmaterial, Zahnriemen, Zahnrädern, Verschleißbelägen und Ventilsitzen verarbeitet werden.

Die DE-OS 27 23 293 beschreibt Reaktivbeschichtungssysteme auf der Basis von Polyolen mit Polyadduktdispersionen aus vorzugsweise Polyhydrazodicarbonamiden in Polyethern, wobei die Hydroxylfunktionalität der Polyole 2,5 bis 3,5 beträgt.

Die Herstellung von Dispersionen von Polyurethanen aus Diisocyanaten und Diolen mit primären Hydroxylgruppen in sekundäre Hydroxylgruppen aufweisenden Polyethern wird in der DE-AS 1 168 075 beschrieben.

Allen diesen Vorveröffentlichungen gemeinsam ist die Verwendung von Polyadduktdispersionen in Polyolen welche zu mehr oder weniger stark vernetzten Polyurethansystemen führen. Die besondere Eignung der erfindungsgemäß ausgewählten Polyole mit dispergierten Polyaddukten zur Herstellung im wesentlichen linearer, thermoplastischer Polyurethanelastomerer zur Herstellung dünnwandiger Formkörper durch Extrudieren, Kalandrieren oder Blasverformung bei den hohen Schmelztemperaturen der Polyurethanelastomeren und die erzielbaren Effekte der Antiblockwirkung und der verminderten Klebrigkeit waren aufgrund der vorliegenden Erfahrungen nicht bekannt bzw. nicht zu erwarten. Vielmehr mußte aufgrund des vorliegenden Kenntnisstandes beispielsweise mit inhomogenen Oberflächen der dünnwandigen Formkörper in Folge optisch störender Hartsegmentassoziationen aus den nicht schmelzenden Polyaddukten gerechnet werden. So lehrt beispielsweise die DE-OS 28 42 806, die ein Verfahren

zur Herstellung segmentierter, thermoplastischer Polyurethane mit gezielt aufgebauten Hartsegmentbereichen beschreibt, auf Seite 6, Zeilen 22 bis 25, daß ein primär erzeugtes, reines Hartsegment wegen seiner hohen Schmelztemperatur zur Erzielung einer homogenen Reaktionsmasse unerwünscht hohe Reaktionstemperaturen erfordern würde. Außerdem erweist sich eine Vielzahl der in Vorveröffentlichungen beschriebenen, Polyaddukte enthaltenden Polyole als nicht geeignet, z. B. Polyadditionsprodukte mit Di- und Polyhydrazidverbindungen, welche aufschmelzen und sich zersetzen ; bestimmte Polyaddukte auf Hydrazinbasis, welche nur bei niedrigen Verarbeitungstemperaturen stabil bleiben, oder Polyadditionsprodukte, die sich bei den hohen Temperaturen in den Polyolen oder den Polyurethanprodukten teilweise oder vollständig lösen, z. B. Polyadditionsprodukte auf Basis von Diolen und nicht symmetrischen Diisocyanaten, Polyadditionsprodukte aus verzweigtkettigen Diolen und Diisocyanaten, oder Polyadditionsprodukte auf Basis von sekundären Diaminen oder auch Polyadditionsprodukte von unsymmetrischen Diisocyanaten mit unsymmetrischen Diaminen und/oder unsymmetrisch aufgebauten Diolen, z. B. Polyaddukte aus Toluylendiisocyanat und Isophorondiamin oder aus Isophorondiisocyanat und Isophorondiamin oder aus Toluylendiisocyanat und 1,2-Propylenglykol.

Es war daher sehr überraschend, daß sich in erfindungsgemäßer Weise unter Verwendung von Polyaddukt/Diol-Dispersionen der erfindungsgemäß charakterisierten Art sich völlig homogene, matte, wenig klebende dünnwandige Formkörper und Folien herstellen lassen. Als besonders überraschend erwies sich der Befund, daß bei erfindungsgemäßer Verfahrensweise die linearen thermoplastischen Polyurethane sich mit einer erheblich größeren Produktionssicherheit verarbeiten lassen als herkömmliche thermoplastische Polyurethane, da sie in einem erheblich weiteren Bereich der NCO-Kennzahlen in homogene Formkörper überführt werden können.

Durch die erfindungsgemäße Verwendung der charakterisierten Dispersionen A) werden aus den daraus hergestellten linearen Polyurethanelastomeren dünnwandige Formkörper oder Folien mit matten, nichtblockenden und klebfreien Oberflächen und mit trockenem Griff erhalten, wobei im Vergleich zu herkömmlichen thermoplastischen Polyurethanen etwa gleicher Härte erheblich weniger an Trennmitteln, Trennwachsen oder inneren Trennmitteln (wie Stearylamid) verwendet werden müssen. Diese Einsparung an Trennmitteln liegt bei mindestens 25 %, oft über 50 %, so daß die erfindungsgemäßen, linearen thermoplastischen Polyurethanformkörper in erheblich geringerem Maße Ausblüh- und Auswanderungserscheinungen bei kritischen Anwendungen zeigen. Weitere, überraschende Vorteile der erfindungsgemäßen linearen, dünnwandigen Polyurethanelastomerformkörper sind eine verbesserte Schaumstoffhaftung, wenn auf derartige Formkörper reaktive Polyurethan-Schaumstoffgemische aufgetragen oder hinterfüllt bzw. kaschiert werden, sowie ihre bessere Verklebbarkeit und Verschweißbarkeit, trotz ihres Gehaltes an hochschmelzenden Polyadditionsprodukten.

Die erfindungsgemäß hergestellten dünnwandigen Formkörper, insbesondere Folien oder Schläuche, können daher als ein- oder allseitige Formbegrenzung von Polyurethanschaumstoffen verwendet werden, die vorzugsweise auf die Formkörper als reaktives PU-Gemisch aufgebracht werden.

Derartige kaschierte Polyurethanschaumstoffe können als elastische, halbharte oder harte Schaumstoffverbundkörper Verwendung finden, z. B. in der Automobiltechnik für Sichtblenden, Polsterarmlehnen, Energieabsorptionselemente, Polster oder als Innenschuh von Skistiefeln.

Die Hinterschäumung kann dabei nach üblichen Verfahrenstechniken der Polyurethanschaumstoffherstellung und Verbundkörperbildung erfolgen. Die dünnwandigen Formkörper oder Folien können beliebig pigmentiert, gefärbt, geprägt, lackiert oder in sonst üblicher Form in ihrer Oberflächenstruktur verändert werden. In Folge ihrer guten Verschweißbarkeit lassen sie sich auch vorteilhaft weiterverarbeiten. Beispiele sind Verschweißungen von Folien bei Bettunterlagen, von Windelstreifen, OP-Folien, Duschvorhängen, Serviertabletts oder die Verklebung von Folien mit anderen Polymeren. Weitere Beispiele sind aufblasbare Körper im Skiinnenschuh, Schwimmwesten, Textilbeschichtungen oder Flachdachfolien.

Als im wesentlichen lineare Ausgangskomponenten Aa) mit Molekulargewichten zwischen 400 und 10000, bevorzugt zwischen 450 und 6000 und mit Schmelzpunkten unter 60 °C, bevorzugt unter 50 °C, kommen für die Erfindung praktisch alle an sich bekannten, etwa 2 Gruppen mit Zerewitinoff-aktiven Wasserstoffatomen, wie Hydroxyl-, primäre und/oder sekundäre Amino-, SH-, Carboxyl- oder Hydrazidgruppen, aufweisenden Verbindungen in Betracht. Es sind dies lineare, d. h. etwa bifunktionelle Polyester, Polylactone, Polyether, Polythioether, Polyesteramide, Polycarbonate, Polyacetale, Vinylpolymere mit funktionellen Endgruppen oder bereits Urethan- oder Harnstoffgruppen enthaltende Verbindungen, welche die genannten Gruppen mit Zerewitinoff-aktiven Wasserstoffatomen, vorzugsweise Hydroxylgruppen, enthalten. Diese Verbindungen entsprechen dem Stand der Technik und werden z. B. in den DE-OSen 23 02 564, 24 23 764, 25 49 372 (US-PS 3 963 679), DE-OS 24 02 840 (US-PS 3 984 607), DE-AS 24 57 387 (US-PS 4 035 213) und in den DE-OSen 2 854 384 und 2 920 501 eingehend beschrieben.

Bevorzugt sind dies hydroxylgruppenhaltige höhermolekulare Verbindungen, z. B. Polyesterdiole aus geradkettigen oder verzweigten aliphatischen und/oder cycloaliphatischen Diolen und aliphatischen Dicarbonsäuren, insbesondere Adipinsäure, welche jedoch auch untergeordnete Mengen an aromatischen Dicarbonsäuren, insbesondere Phthalsäure und gegebenenfalls auch Terephthalsäure, sowie deren Hydrierungsprodukten enthalten können, ferner Hydroxypolycarbonate, Hydroxypolycaprolactone, oder auch Polyetherdiole wie Hydroxypolyethylenoxide, Hydroxypolypropylenoxide, Hydroxypolytetrahydrofurane und Mischpolyether aus Propylenoxid und/oder Ethylenoxid und/oder Tetrahydrofuran.

An Stelle dieser bevorzugten höhermolekularen Diolverbindungen können jedoch auch höhermolekulare Verbindungen mit endständigen Mercaptogruppen, z. B. Polythioether eingesetzt werden.

Gegebenenfalls können auch höhermolekulare Polyaminoverbindungen, vorzugsweise mit primären aromatischen Aminogruppen eingesetzt werden. Bevorzugte Vertreter werden durch Hydrolyse von entsprechenden NCO-Prepolymeren auf der Basis von höhermolekularen Polyhydroxyverbindungen und überschüssigen aromatischen Diisocyanaten, durch (vorzugsweise basische) Hydrolyse hergestellt. Beispiele für diese Verfahren werden in der DE-OS 2 948 419, DE-OS 3 039 600, FR-OS 3 112 118, DE-P-A 61 627, EP-A 71 132, EP-A 71 139 und EP-A 97 869 angegeben. In der erstgenannten Druckschrift werden auch weitere Verfahren des Standes der Technik zur Herstellung von aromatischen Aminoverbindungen höhermolekularer Struktur, sogenannte Aminopolyether genannt, wie sie für das erfindungsgemäße Verfahren geeignet sind. Weitere Herstellungsverfahren werden in der DE-AS 1 694 152, FR-PS 1 415 317 oder DE-AS 1 155 907 beschrieben. Bei Verwendung aromatischer Aminopolyether als Aa) werden vorzugsweise Polyaddukte Ab) aus (cyclo)aliphatischen Diaminen und Diisocyanaten verwendet.

Als höhermolekulare, hochschmelzende Polyisocyanat-Polyadditionsprodukte Ab) welche in den höhermolekularen, difunktionellen Verbindungen Aa) dispergiert vorliegen, werden solche Polyaddukte verwendet, welche aus mindestens zwei Zerewitinoff-aktive Wasserstoffatome aufweisenden Verbindungen vom Molekulargewicht 18 bis 399 und organischen Di- und/oder Polyisocyanaten mit Molekulargewichten unter 400 hergestellt wurden, vorzugsweise im Verhältnis NCO/Zerewitinoffaktivem Wasserstoff gleich 0,8 : 1 bis 1,3 : 1, insbesondere in etwa äquivalenten Mengen, und die in feinteiliger Dispersionsform mit einer mittleren Teilchengröße von 0,01 bis 25 μm, vorzugsweise 0,1 bis 5 μm, insbesondere 0,1 bis 1,5 μm, in den im wesentlichen linearen Verbindungen Aa) vorliegen.

Erfindungsgemäß kommen nur solche Polyaddukte Ab) in Betracht, welche Schmelzpunkte oberhalb 220 °C, vorzugsweise oberhalb 260 °C aufweisen, und deren Dispersionen in dem Dispersionsmittel Aa) mindestens bis 15°, vorzugsweise bis 30° oberhalb der jeweiligen Polyurethan-elastomer-Verarbeitungstemperatur, (vorzugsweise bis 240 °C, insbesondere aber bis 260 °C), sich nicht zersetzen oder lösen sondern stabil und feinteilig bleiben und die sich auch bei den Verarbeitungstemperaturen der Polyurethane, welche üblicherweise bis 240 °C, zumeist von 110 bis 230 °C und vorzugsweise von 175 bis 210 °C liegen, in dem Reaktionsgemisch oder den Polyurethanelastomerprodukten nicht zersetzen oder lösen.

Bei den erfindungsgemäßeinzusetzenden Polyaddukten Ab) ist vorzugsweise mindestens eine der Komponenten, d. h. entweder das Diisocyanat β) oder das Kettenverlängerungsmittel bzw. der Vernetzer α), symmetrisch aufgebaut. Es ist dabei auch bevorzugt, daß mindestens eine der Komponenten der höhermolekularen, hochschmelzenden Polyaddukte Ab) von den Kettenverlängerungsmitteln B) oder von den bei der Herstellung der Polyurethanelastomeren eingesetzten Diisocyanaten C) verschieden ist.

Beispiele für symmetrische Diisocyanate sind 1,4-Phenylendiisocyanat, Diphenyl-4,4'-diisocyanat, 4,4'-Dimethyl-diphenyl-3,3'-diisocyanat, Diphenylmethan-4,4'-diisocyanat, Diphenylethan-4,4'-diisocyanat, 3,3'-Dimethyl-diphenylmethan-4,4'-diisocyanat, Diphenylether-4,4'-diisocyanat, Paraxylylendiisocyanat, α,α,α',α'-Tetramethyl-paraxylylendiisocyanat, Naphthylen-1,5-diisocyanat, 4,4'-Dimethyl-3,3'-diisocyanato-N,N'-diphenylharnstoff, dimeres 4,4'-Diisocyanato-diphenylmethan oder cycloaliphatische bzw. aliphatische Diisocyanate wie z. B. 1,4-Cyclohexandiisocyanat, Dicyclohexyl-4,4'-diisocyanat, Dicyclohexylmethan-4,4'-diisocyanat, 3,3'-Dimethyl-dicyclohexylmethan-4,4'-diisocyanat, Hexamethylendiisocyanat, Tetramethylendiisocyanat oder Dodecamethylendiisocyanat.

Gemische von 4,4'-Diphenylmethandiisocyanat mit höherkernigen Diisocyanaten, wie sie bei der Phosgenierung von Polyamin-Rohgemischen aus der Kondensation von Anilin und Formaldehyd entstehen oder modifizierte Polyisocyanate, z. B. carbodiimidisierte oder urethanisierte Gemische von Diphenylmethandiisocyanaten können anteilsweise mitverwendet werden, ebenso Polyisocyanate mit drei oder mehr NCO-Gruppen.

Beispiele für symmetrische Verbindungen mit 2 gegenüber Isocyanaten reaktiven Wasserstoffatomen sind aromatische Diamine wie Paraphenylendiamin, 4,4'-Diphenyl-diamin, Diphenylmethan-4,4'-diamin, 3,3'-Dimethyl-diphenylmethan-4,4'-diamin, Diphenylethan-4,4'-diamin, Diphenylether-4,4'-diamin, Paraxylylendiamin, α,α,α',α'-Tetramethylparaxylylen-diamin, Naphthylen-1,5-diamin oder cycloaliphatische bzw. aliphatische Diamine wie z. B. 1,4-Cyclohexandiamin, Dicyclohexylmethan-4,4'-diamin, Dicyclohexylethan-4,4'-diamin, Dicyclohexylether-4,4'-diamin, 3,3'-Dimethyl-dicyclohexylmethan-4,4'-diamin, ferner Hexamethylen-1,6-diamin, Tetramethylen-1,4-diamin oder Dodecamethylen-1,12-diamin. Beispiele für symmetrische Diole sind Ethylenglykol, Butandiol-1,4-Hexandiol-1,6, Octandiol-1,8 oder cycloaliphatische Diole wie 1,4-Dihydroxycyclohexan, 2,5-Dimethyl-1,4-dihydroxycyclohexan oder symmetrische Derivate wie Hydrochinon-bis-(β-hydroxyethyl)-ether, sowie Terephthalsäure-bis-(β-hydroxyethyl)-ester.

Polyaddukte, in denen die genannten symmetrischen Diisocyanate und die genannten symmetrischen Verbindungen mit reaktiven Wasserstoffatomen verwendet werden, sind erfindungsgemäß besonders bevorzugt. Sie sind hochschmelzend und bleiben in den höhermolekularen, difunktionellen Verbindungen Aa) auch beim Erhitzen bis 240 °C, vorzugsweise bis 260 °C, stabil und feinteilig verteilt, ohne sich zu zersetzen oder zu lösen.

Insbesondere sind bevorzugt Umsetzungsprodukte aus symmetrischen, aromatischen Diisocyanaten und symmetrischen Diaminen und ganz besonders bevorzugt die Umsetzungsprodukte von symmetrischen aromatischen Diisocyanaten mit symmetrischen aromatischen Diaminen. Beispiele sind Polyharn-

# 0 195 899

stoffe aus Diphenylmethan-4,4'-diisocyanat und Diphenylmethan-4,4'-diamin, aus Diphenylmethan-4,4'-diisocyanat und Naphthylen-1,5-diamin, aus Diphenylmethan-4,4'-diisocyanat und Dicyclohexylmethan-4,4'-diamin, aus Diphenylmethan-4,4'-diisocyanat und 3,3'-Dimethyl-dicyclohexylmethan-4,4'-diamin oder aus Diphenylmethan-4,4'-diisocyanat und Hexamethylendiamin. Weitere Beispiele sind hochschmelzende Polyurethane aus symmetrischen Diisocyanaten wie Diphenylmethan-4,4'-diisocyanat und symmetrischen, geradkettigen Diolen wie Ethylenglykol, Butandiol oder Hexandiol, dispergiert in Polyolen mit sekundären OH-Gruppen, doch sind solche Polyurethan-Polyaddukte weniger bevorzugt.

Erfindungsgemäß können jedoch auch Polyaddukte verwendet werden, in denen nur eine der Komponenten symmetrisch aufgebaut ist, soweit ihr Schmelzpunkt und ihre Löslichkeit/Thermostabilität den geforderten Auswahlbedingungen entspricht.

Als nicht symmetrische Di- und/oder Polyisocyanate können hierbei die üblichen Di- und/oder Polyisocyanate eingesetzt werden, wie sie als solche literaturbekannt sind. Beispiele sind die Toluylendiisocyanate, Diphenylmethan-2,4'-diisocyanat, 3'-Methyl-diphenylmethan-2,4-diisocyanat oder Mischungen aus überwiegend unsymmetrischen Isomeren mit symmetrischen Isomeren, z. B. Isomerengemische aus 4,4'-, 2,4'- und gegebenenfalls 2,2'- mit 4,4'-Diphenylmethandiisocyanat.

Beispiele für nichtsymmetrische aliphatische oder cycloaliphatische Diisocyanate sind : 1-Methyl-2,4-cyclohexandiisocyanat, 2,4'-Dicyclohexylmethandiisocyanat, das Isophorondiisocyanat oder Trimethylhexandiisocyanate und das Lysinmethylesterdiisocyanat.

Als nichtsymmetrische Verbindungen mit zwei oder mehreren, gegenüber Isocyanat reaktiven Wasserstoffatomen werden vorzugsweise Di- und/oder Polyamine eingesetzt, z. B. 2,4-Toluylendiamin, 2,4'-Diaminodiphenylmethan, 3,5-Diethyl-2,4-toluylendiamin oder ihre Mischungen mit symmetrischen Isomeren, 1,3,5-Triethyl-2,4-diaminobenzol, 1-Methyl-2,4-diaminocyclohexan, Isophorondiamin, Lysinmethylester oder 2,2,4-Trimethylhexandiamin. Auch mehrwertige Amine sind — in untergeordneten Mengen — geeignet, z. B. Diethyltriamin, 1,3,5-Triaminocyclohexan oder 1,5,11-Triamino-undecan.

Beispiele für Polyaddukte Ab) mit nur einer symmetrisch aufgebauten Komponente sind Polyharnstoffe aus 2,4-Toluylendiisocyanat und Diphenylmethan-4,4-diamin ; 2,4-Toluylendiisocyanat und Hexamethylendiamin ; Diphenylmethan-4,4'-diisocyanat und 2,4-Toluylendiamin ; Diphenylmethan-4,4'-diisocyanat und Isophorondiamin oder aus 3-Methyl-4,4'-diisocyanato-dicyclohexylmethan und Hexamethylendiamin.

Die anwendbaren Polyaddukte mit mindestens einer symmetrischen Komponente besitzen die geforderten Schmelzpunkte oberhalb 220°, sind in den höhermolekularen Diolen Aa) beim Erwärmen auf 240 °C nicht löslich und bleiben in den Polyurethanen ungelöst und in feinverteiltem Zustand.

Ganz besonders bevorzugt sind jedoch die aus sowohl symmetrischen Diisocyanaten wie auch symmetrischen Polyaminen hergestellten Polyaddukte, insbesondere die Polyaddukte aus symmetrischen aromatischen Verbindungen, beispielsweise aus Diphenylmethan-4,4'-diisocyanat und Diphenylmethan-4,4'-diamin. Diese Verbindungen zeigen höchste Schmelzpunkte, höchste Stabilität in den höhermolekularen Diolen und höchste Stabilität unter Herstellungs- und Verarbeitungsbedingungen unter Beibehaltung der feinteiligen Dispersion und ohne Zersetzungserscheinungen. In ähnlicher Weise sind besonders gut geeignet Polyharnstoffe, die aus den symmetrischen aromatischen Diisocyanaten und Wasser hergestellt werden, insbesondere der Polyharnstoff aus Diphenylmethan-4,4'-diisocyanat und Wasser.

Polyaddukte auf der Basis von Diisocyanaten und Hydrazin oder Hydrazinhydrat ergeben Polyaddukte, welche bei hohen Temperaturen, z. B. 240 bis 260° thermisch instabil sind und gegebenenfalls eine teilweise oder vollständige Zersetzung bei hohen Verarbeitungstemperaturen z. B. 230 bis 240 °C ergeben. Derartige Polyaddukte können bedingt noch bei niedrigen Verarbeitungstemperaturen, z. B. bis maximal 210° verwendet werden und sind daher weniger bevorzugt.

Polyaddukte aus Dihydrazidverbindungen und Diisocyanaten sind thermisch zumeist instabil und zeigen dann insbesondere bei den höheren Verarbeitungstemperaturen Zersetzungserscheinungen.

Polyaddukte, bei denen sowohl die Diisocyanat- wie auch die Diaminkomponente einen nichtsymmetrischen Aufbau zeigen sind in den meisten Fällen ungeeignet, da sie sich entweder bereits bei der Herstellung der Polyurethane oder bei den höheren Verarbeitungstemperaturen in dem Polyurethan auflösen. Beispiele sind Umsetzungsprodukte von 2,4-Toluylendiisocyanat und Toluylendiaminen oder von Toluylendiisocyanat und Isophorondiamin bzw. Isophorondiisocyanat und Isophorondiamin.

Polyurethane sind als Komponente Ab) nur geeignet, wenn sie aus vorzugsweise symmetrischen Diisocyanaten und symmetrischen Diolen aufgebaut sind, insbesondere Alkylendiolen $HO-(-CH_2-)_n-OH$ (n = 2,4,6,8,10,12), 1,4-Bis-hydroxymethyl-cyclohexan, Hydrochinon-bis-(β-hydroxyethyl)-ether oder Terephthalsäure-bis-(β-hydroxyethyl)-ester.

Polyurethane mit unsymmetrischen, verzweigtkettigen Diolkomponenten sind im erfindungsgemäßen Sinne zumeist ungeeignet, da sie sich bei hohen Verarbeitungstemperaturen in dem Polyurethan lösen oder schmelzen. Im erfindungsgemäßen Sinne als wenig geeignet haben sich auch Polyaddukte aus Diisocyanaten und Diaminen mit sekundären Aminogruppen erwiesen.

Die Herstellung der erfindungsgemäß zu verwendenden Polyaddukte Ab), vorzugsweise Polyharnstoffe, geschieht nach den bereits vorstehend beschriebenen, im Prinzip bekannten Methoden durch Umsetzung der Komponenten im Verhältnis NCO/Zerewitinoff-aktiven Wasserstoffatomen = 0,8 : 1 bis 1,3 : 1, vorzugsweise 1 : 1. Vorzugsweise erfolgt die Umsetzung zwischen den Komponenten in den höhermolekularen Verbindungen Aa), vorzugsweise in höhermolekularen Diolen. Die Polyaddukte liegen in feinteiliger Dispersion mit einer mittleren Teilchengröße von 0,01 bis 25 μm, vorzugsweise 0,1 bis 5 μm,

6

insbesondere 0,1 bis 1,5 μm in den höhermolekularen Verbindungen Aa), im allgemeinen in einer Menge bis 60 Gew.-%, vorzugsweise von 1 bis 40 Gew.-% vor. Konzentriertere Dispersionen A) mit höheren Feststoffgehalten an Ab) können gegebenenfalls mit zusätzlichen höhermolekularen Verbindungen Aa) verdünnt werden, so daß man zu solchen Polyadduktkonzentrationen gelangt, die 0,66 bis 15 Gew.-%, vorzugsweise 1 bis 10 Gew.-%, insbesondere 2 bis 6 Gew.-% Polyaddukt Ab) in der PU-Elastomersubstanz ergeben.

Als zwei Zerewitinoff-aktive Wasserstoffatome aufweisende Kettenverlängerungsmittel B) mit einem Molekulargewicht von 18 bis 399 werden Wasser, Diole, Aminoalkohole oder Diamine oder auch Gemische solcher Verbindungen eingesetzt. Bevorzugt werden gerad- oder verzweigtkettige aliphatische Diole mit bis zu 12 Kohlenstoffatomen, vorzugsweise Ethylenglykol, Butandiol-1,4 und/oder Hexandiol-1,6, Neopentylglykol, 1,4-Bis-hydroxymethylcyclohexan, Hydrochinon-bis-(β-hydroxyethyl)-ether oder Terephthalsäure-bis-(β-hydroxyethyl)-ester verwendet. Als Diamine können insbesondere das Isophorondiamin oder aromatische Diamine, beispielsweise 3,5- und/oder 2,4-Diaminobenzoesäureester gemäß DE-OS 2 025 900, estergruppenhaltige Diamine, die in den DE-OSen 1 803 635, 2 040 650 und 2 160 589 beschrieben sind, ethergruppenaufweisende Diamine gemäß DE-OS 1 770 525 und 1 809 172, gegebenenfalls in 5-Stellung substituierte 2-Halogen-1,3-phenylendiamine, 3,3'-Dichlor-4,4-diamino-diphenylmethan, 4,4'- und/oder 2,4-Diamino-diphenylmethan, 4,4'-Diaminodiphenylsulfide, 4,4'-Diaminodithioether, 3,5-Diethyl-2,4-toluylendiamin, 3,5-Diethyl-2,6-toluylendiamin oder 3,3'-Dimethyl-diphenylmethan-4,4'-diamin, 3,3',5,5'-Tetramethyl-diphenylmethan-4,4'-diamin, oder ihre Mischungen, 1,3,5-Triethyl-2,4-diaminobenzol, oder 3,5-Diethyl-3',5'-diisopropyl-diphenylmethan-4,4'-diamin oder aliphatisch-aromatische Diamine wie Aminoalkylthioaniline gemäß DE-OS 2 734 574, eingesetzt werden.

Bevorzugte aromatische Diamine sind 3,5-Diethyl-toluylen-2,4-(und/oder 2,6)-diamine, die estergruppenhaltigen Diamine nach DE-OS 1 803 635, 2 040 650 und 2 160 589, sowie 3,3'-Dichlor-4,4'-diamino-diphenylmethan, oder 3,3'-Dimethyl-diphenylmethan-4,4-diamine oder die Reaktionsgemische aus der Kondensation von 2,5-Diethylanilin und 2,5-Diisopropylanilin mit Formaldehyd. Die Diamine können auch in Mischung mit Dialkoholen, z. B. Butandiol-1,4 oder 1,4,3,6-Dianhydrohexiten, und/oder Wasser verwendet werden. Die Verwendung von Diaminen als B) ist jedoch gegenüber der Verwendung von Diolen weniger bevorzugt.

Ferner können gegenüber Isocyanaten monofunktionelle Verbindungen in untergeordneten Anteilen, z. B. von 0,01 bis 3 Gew.-%, bezogen auf PU-Feststoff als sogenannte Kettenabbrecher mitverwendet werden. Beispiele sind Monoalkohole wie Butanol, 2-Ethylhexanol, Isobutylalkohol und Stearylalkohol oder Monoamine wie Anilin, Dibutylamin, N-Methyl-stearylamin, Piperidin oder N,N-Dimethylhydrazin.

Zur Herstellung thermoplastischer Polyurethane für das erfindungsgemäße Verfahren besonders bevorzugte Kettenverlängerungsmittel B) sind Ethylenglykol, Diethylenglykol, Butandiol-1,4, Hexandiol-1,6, Neopentylglykol sowie der Hydrochinon-bis-hydroxyethylether oder beliebige Gemische aus zwei oder mehreren dieser Komponenten. Besonders bevorzugt sind Butandiol-1,4 und/oder Hexandiol-1,6.

Zur Herstellung der linearen, thermoplastischen Polyurethane zu verwendende Diisocyanate C) sind die an sich bekannten, aliphatischen, cycloaliphatischen, aromatischen, araliphatischen und/oder heterocyclischen Diisocyanate des Standes der Technik, wie sie z. B. in den DE-OS 23 02 564, 24 23 764, 25 49 372, 24 02 840, 24 57 387 und in der DE-OS 2 854 384 sowie 2 920 501 aufgeführt sind. Erfindungsgemäß bevorzugte Diisocyanate sind Diphenylmethan-4,4'- und/oder 2,4'- und/oder 2,2'-diisocyanate, die isomeren Toluylendiisocyanate und ihre Gemische, Naphthylen-1,5-diisocyanat, dimeres Toluylen-2,4-diisocyanat, sowie Hexamethylendiisocyanat, Isophorondiisocyanat, Trimethylhexandiisocyanat, Lysinesterdiisocyanate, Xylylendiisocyanate sowie die Dicyclohexylmethan-4,4'- und/oder 2,4'- und/oder 2,2'-diisocyanate. Von besonderer technischer Bedeutung ist das Diphenylmethandiisocyanat mit überwiegenden Anteilen an 4,4'-Diisocyanatisomeren, bzw. seine Gemische mit 2,4'- und/oder 2,2'-Isomeren.

Als gegebenenfalls mitzuverwendende Hilfs- und Zusatzstoffe D) seien genannt Katalysatoren der üblichen Art, z. B. tertiäre Amine oder Metallsalze bzw. metallorganische Verbindungen, Farbstoffe oder Pigmente, Füllstoffe, Stabilisatoren wie UV-Absorptionsmittel, phenolische Antioxidantien, Lichtschutzmittel, Gleitmittel, Silikone, Flammschutzmittel oder fungistatisch und/oder bakteriostatisch wirksame Substanzen.

Die Herstellung der Polyurethane, welche die höhermolekularen Polyaddukte enthalten, erfolgt nach den üblichen Verfahren zur Herstellung von Elastomeren, d. h. diskontinuierlich oder kontinuierlich, ein- oder mehrstufig. Beispielsweise werden im diskontinuierlichen Verfahren, z. B. nach der DE-AS 1 106 969 die Komponenten A), B), C) und gegebenenfalls D) in den berechneten Verhältnissen bei 80 bis 100 °C etwa eine Minute intensiv vermischt und auf Bleche gegossen. Das Reaktionsgemisch wird durch Nachheizen, z. B. 30 Minuten bei 110 °C, ausgehärtet und danach granuliert. Es können jedoch auch die Komponenten A) und C) zunächst bei 60 bis 80 °C zu einem Isocyanatgruppen aufweisenden Prepolymeren umgesetzt werden, welches in einer zweiten Reaktionsstufe mit dem Kettenverlängerer B) und gegebenenfalls den Zusatzstoffen D) intensiv vermischt, auf Bleche gegossen und ausgehärtet wird. Vorzugsweise werden die erfindungsgemäßen Polyurethanelastomeren jedoch in einem kontinuierlichen Verfahrensprozeß, beispielsweise nach der DE-AS 23 02 564 hergestellt, wobei man die Komponenten A) bis D) bzw. ein in einer Vorstufe aus den Komponenten A) und C) hergestelltes NCO-Prepolymer sowie die Komponenten B) und D) in den berechneten Gewichtsverhältnissen kontinuierlich in eine auf etwa 180 bis 200 °C beheizte, selbstreinigende, zweiwellige Schneckenmaschine mit gleichsinnig rotierenden Schneckenwellen, die mit Knet- und Förderelementen bestückt sind, einspeist und die am Schneckenende austretende Produktschmelze nach Abkühlung und Verfestigung einer Stranggranulation zuführt.

Die erfindungsgemäße Herstellung der matten nichtblockenden, dünnwandigen Formkörper erfolgt mittels Extrusions-, Kalandrier- oder Blasverformungsverfahren bei Verarbeitungstemperaturen von üblicherweise bis zu 240°, beispielsweise von 110 bis 230° und vorzugsweise 175 bis 210 °C (PU-Massetemperatur) zu Formkörpern, Folien oder Schläuchen mit Wandstärken unter 2 mm, vorzugsweise von 5 μm bis 500 μm, bevorzugt 20 bis 200 μm. Die erfindungsgemäß zu verwendenden thermoplastischen Polyurethane erlauben die Herstellung von matten, klebfreien oder in ihrer Blocktendenz erheblich reduzierten Folien nach verschiedenen Herstellverfahren. So lassen sich blockfreie Frachfolien in einer Dicke von ca. 0,05 bis 2 mm extrudieren. Folienschläuche weisen vorzugsweise eine Dicke von 0,2 bis 0,5 mm auf. Bevorzugt lassen sich geblasene Folien mit einer Dicke von 20 bis 300 μm herstellen.

Diese extrudierten oder geblasenen Folien lassen sich gut mit Polyurethanschaumstoff-Reaktivmischungen hinterschäumen. Hierbei ist die Haftung der erfindungsgemäß hergestellten matten Folien zum Schaumstoff erheblich besser als bei üblichen Polyurethanfolien ohne Zusatz der erfindungsgemäß zu verwendenden Polyaddukte. Auffällig ist auch die agglomeratfreie Verteilung der feindispersen Teilchen der Polyaddukte in den Folien.

Die Folienextrusion erfolgte in den Beispielen mit Hilfe eines mit Folienblaskopf versehenen Einwellenextruders vom Typ Extrusiograph 25 D der Firma Brabender. Die über eine Ringdüse austretende Polyurethanschmelze wurde durch entsprechende Steuerung der Stütz- und Kühlluft auf die gewünschte Wandstärke verblasen.

Die folgenden Beispiele erläutern das erfindungsgemäße Verfahren. Wenn nichts anders vermerkt, sind Mengenangaben als Gewichtsteile bzw. Gewichtsprozente zu verstehen.

Beispiel 1

a) Herstellung der Dispersion eines Polyharnstoffs im Polyesterdiol

In einen auf 80 °C temperierten Stachelmischer (Kammervolumen 1,5 l, Drehzahl 1 500 U/min) wurden kontinuierlich pro Minute 2 212 g einer Mischung aus 30 g 4,4'-Diaminodiphenylmethan in 2 182 g Butandiol-1,4/Adipinsäure-Polyesterdiol (OH-Zahl 52,7 ; Säurezahl 0,9) und getrennt davon 38 g 4,4'-Diisocyanatodiphenylmethan eingespeist. Nach einer Verweilzeit von ca. 40 Sekunden verließ eine fast vollständig abreagierte, cremefarbene, homogene Dispersion den Stachelmischer. Die Dispersion wurde in ein Verweilzeitgefäß überführt, wo sie unter Rühren bei 80 °C gehalten wurde. Das Dispersionspolyol war bis zu einer Temperatur von mindestens 240 °C/5 Minuten bei dieser Temperatur stabil und hatte folgende Kenndaten :
Hydroxylzahl : 51,1
Säurezahl : 0,9
Viskosität (80 °C) : 1 850 mPa.s
mittlere Teilchengröße der dispergierten Teilchen : 0,7 μm
Dispersionsgehalt : 3,04 % Feststoff in der Dispersion.

b) Herstellung des thermoplastischen Polyurethans auf einem Zweiwellen-Schneckenextruder

Rezeptur :

100  Teile Dispersionspolyol 1a,
  8  Teile Butandiol-1,4 und
  0,3 Teile Stearylamid als inneres Trennmittel
wurden mit 4,4'-Diisocyanatodiphenylmethan in unterschiedlichen Dosierbereichen (NCO/OH-Verhältnis von 0,98 bis 1,02) in den Versuchen A) bis G) in bekannter Weise auf einem Zweiwellen-Reaktionsextruder gemäß der deutschen Patentschrift 23 02 564 umgesetzt. Folgende Dosierbereiche wurden verwendet :

A) 33,13 Teile 4,4'-Diisocyanatodiphenylmethan (NCO/OH = 0,98)
B) 33,47 Teile 4,4'-Diisocyanatodiphenylmethan (NCO/OH = 0,99)
C) 33,81 Teile 4,4'-Diisocyanatodiphenylmethan (NCO/OH = 1,00)
D) 34,15 Teile 4,4'-Diisocyanatodiphenylmethan (NCO/OH = 1,01)
E) 34,49 Teile 4,4'-Diisocyanatodiphenylmethan (NCO/OH = 1,02)

Der Zweiwellen-Reaktionsextruder bestand aus zwei gleichsinnig rotierenden, 1 855 mm langen Schnecken, die abwechselnd mit Knet- und Förderelementen gemäß der deutschen Patentschrift 23 02 564 bestückt waren und einen Außendurchmesser von 53 mm aufwiesen.

Die Gehäusetemperatur des Reaktionsextruders betrug in der Zone des Produkteintritts 180 °C, in der Mitte des Extruders 200 °C und im letzten Abschnitt wieder 180 °C. Der Ausstoß an Polyurethan betrug bei einer Schneckendrehzahl von 250 U/min 80 kg/h.

c) erfindungsgemäße Herstellung von Blasfolien

Das erhaltene Polyurethan 1b) ließ sich über den gesamten Dosierbereich (Versuch A bis E) zu völlig homogenen, matten, nicht blockenden und klebfreien Blasfolien mit folgenden mechanischen Eigenschaften verarbeiten (siehe Tabelle 1).

Tabelle 1

| Beispiel 1) | A | B | C | D | E |
|---|---|---|---|---|---|
| 100 % Modul (MPa) | 4,5 | 4,9 | 4,9 | 4,9 | 5,8 |
| 300 % Modul (MPa) | 10,2 | 12,3 | 12,6 | 12,7 | 16,6 |
| Zugfestigkeit (MPa) | 29,8 | 39,6 | 42,7 | 43,4 | 53,4 |
| Bruchdehnung (%) | 648 | 620 | 615 | 604 | 575 |
| Shore-Härte A | 83 | 83 | 83 | 84 | 85 |
| Shore-Härte D | 30 | 32 | 33 | 33 | 34 |
| Rückprallelastizität (%) | 45 | 45 | 47 | 46 | 46 |
| Gehalt an Polyaddukt im PU-Elastomeren (%) | ca. 2.14 | | | | |

Die Verarbeitungstemperatur auf dem Blasextruder lag zwischen 180 und 200 °C (Produkttemperatur). Die erhaltenen Blasfolien wiesen eine Wandstärke von etwa 50 μm auf. (Zur Verwendung als Schaumstoffverbund siehe Beispiel 3d).

Beispiel 2 (Vergleichsbeispiel)

Zur Herstellung eines konventionellen thermoplastischen Polyurethans vergleichbarer Shore-Härte wurden in Analogie zu Beispiel 1b

100 Teile Butandiol-1,4/Adipinsäure-Polyester (OH-Zahl 52,7 ; Säurezahl 0,9),
9,5 Teile Butandiol-1,4 und
0,6 Teile Stearylamid mit

A) 37,56 Teilen 4,4'-Diisocyanatodiphenylmethan (NCO/OH = 0,98)
B) 37,95 Teilen 4,4'-Diisocyanatodiphenylmethan (NCO/OH = 0,99)
C) 38,33 Teilen 4,4'-Diisocyanatodiphenylmethan (NCO/OH = 1,00)
D) 38,71 Teilen 4,4'-Diisocyanatodiphenylmethan (NCO/OH = 1,01)
E) 39,10 Teilen 4,4'-Diisocyanatodiphenylmethan (NCO/OH = 1,02)

umgesetzt.

Das erhaltene Polyurethan ergab klar-transparente Blasfolien mit stark blockender Oberfläche, die in verarbeitungsfrischem Zustand verklebten. Nur in der Einstellung C) ließ sich das Elastomere mit guter Homogenität, wenn auch hoher Verklebungstendenz verarbeiten ; die Einstellungen B) und D) lieferten nur mäßig homogene, die Einstellungen A) und E) stark inhomogene Folien. Die Eigenschaften dieser Folien werden in der Tabelle 2 wiedergegeben. Zur Verwendung als Schaumstoffverbund siehe Beispiel 3d.

(Siehe Tabelle 2 Seite 10 f.)

Tabelle 2

| (Vergleichs)Beispiel 2) | A | B | C | D | E |
|---|---|---|---|---|---|
| 100 % Modul(MPa) | 4,3 | 4,6 | 4,7 | 4,8 | 5,1 |
| 300 % Modul (MPa) | 9,9 | 10,7 | 11,0 | 11,7 | 12,5 |
| Zugfestigkeit (MPa) | 30,5 | 37,9 | 40,8 | 42,6 | 48,3 |
| Bruchdehnung (%) | 641 | 610 | 575 | 543 | 515 |
| Shore-Härte A | 83 | 84 | 84 | 84 | 85 |
| Shore-Härte B | 32 | 33 | 34 | 34 | 34 |
| Rückprallelastizität (%) | 44 | 44 | 44 | 43 | 43 |
| Gehalt an Polyaddukt in PU-Elastomeren | | | 0 | | |
| Aussehen der Folien | | klar transparent | | | |

Oberflächeneigenschaften der Folien: alle mit stark blockenden Oberflächen, verklebend

Einheitlichkeit der Folien:

| | A | B | C | D | E |
|---|---|---|---|---|---|
| | stark inhomogen | mäßig homogen | homogen | mäßig homogen | stark inhomogen |

0 195 899

Beispiel 3

a) Dispersion eines Polyharnstoffs in einer Polyesterdiolmischung

Unter den in Beispiel 1a angegebenen Bedingungen wurde aus 50 Teilen Butandiol-1,4/Adipinsäure-Polyester (OH-Zahl : 52,7 ; Säurezahl : 0,9), und 50 Teilen Hexandiol-1,6/Neopentylglykol/Adipinsäure-Mischpolyester (OH-Zahl 60,3 ; Säurezahl : 0,8 ; Molverhältnis der Diole 65 : 35), 2,33 Teilen 4,4'-Diaminodiphenylmethan (gelöst in den Polyestern) und 2,94 Teilen 4,4'-Diisocyanatodiphenylmethan ein bis mindestens 240 °C stabiles Dispersionspolyol mit folgenden Kenndaten hergestellt :

Hydroxylzahl : 53,4
Säurezahl : 0,7
Viskosität (80 °C) : 3 120 mPa.s
Teilchengröße : 0,42 μm
Feststoffgehalt : 5,00 %
Dispersion stabil bis ≧ 240 °C.

b) thermoplastisches Polyurethan

Analog Beispiel 1b wurde ein thermoplastisches Polyurethan hergestellt aus

100 Teilen Dispersionspolyol 3a,
 6,5 Teilen Butandiol-1,4 und
 0,5 Teilen Stearylamid mit jeweils

A) 29,51 Teilen 4,4'-Diisocyanatodiphenylmethan (NCO/OH = 0,98)
B) 29,81 Teilen 4,4'-Diisocyanatodiphenylmethan (NCO/OH = 0,99)
C) 30,12 Teilen 4,4'-Diisocyanatodiphenylmethan (NCO/OH = 1,00)
D) 30,42 Teilen 4,4'-Diisocyanatodiphenylmethan (NCO/OH = 1,01)
E) 30,72 Teilen 4,4'-Diisocyanatodiphenylmethan (NCO/OH = 1,02)

c) Verarbeitung zu Blasfolien (erfindungsgemäß)

Das erhaltene Polyurethan ließ sich bei Produkttemperaturen von 170 bis 185 °C über den gesamten Dosierbereich zu homogenen, matten, nicht blockenden und völlig klebfreien Blasfolien mit einer Wandstärke von 55 μm und folgenden mechanischen Eigenschaften verarbeiten (siehe Tabelle 3) :

Tabelle 3

| Beispiel 3 | A | B | C | D | E |
|---|---|---|---|---|---|
| 100 % Modul (MPa) | 4,7 | 4,9 | 5,0 | 5,1 | 5,3 |
| 300 % Modul (MPa) | 8,8 | 9,2 | 9,9 | 10,1 | 11,4 |
| Zugfestigkeit (MPa) | 21,6 | 28,1 | 34,1 | 36,6 | 44,6 |
| Bruchdehnung (%) | 650 | 617 | 595 | 598 | 556 |
| Shore-Härte A | 79 | 79 | 80 | 80 | 80 |
| Shore-Härte D | 27 | 28 | 29 | 29 | 30 |
| Rückprallelastizität (%) | 39 | 41 | 42 | 42 | 43 |
| Gehalt an Polyaddukten (%) in Polyurethanfolie | | | ca. 3,65 | | |

d) Verwendung der Blasfolien zur Direkthinterschäumung (erfindungsgemäß)

Eine 100 μm dicke Folie entsprechend Beispiel 3c wird in den Boden einer rechteckigen, 4 1-Aluminiumform gelegt und auf sie werden die gut gemischten, flüssigen Komponenten einer Polyurethan-Kaltschaum-Formulierung (Rezepturen siehe unten) gegossen. Nach Ausreagieren des Schaumstoffes in der verschlossenen Form läßt sich die Haftung der TPU-Folie nach einem abgestuften Bewertungsschema von gut (d. h. Folie hat guten Verbund zum Schaumstoff und reißt bei Trennversuchen nur in der Schaumstoffschicht) bis « keine Haftung » (Folie kann ohne Widerstand vom Schaumstoff abgezogen werden ; die Schaumstoffoberfläche bleibt hierbei intakt), beschreiben.

11

Die Folie entsprechend dem erfindungsgemäßen Beispiel 3c zeigt hierbei eine gute Haftung (Folie ist nicht ohne Verletzung des darunterliegenden Schaumstoffes zu trennen), während die Folie entsprechend dem nicht erfindungsgemäßen Beispiel 4 eine schlechte Haftung zum Schaumstoff zeigt und sich von der Schaumstoffoberfläche glatt abziehen läßt.

Bei diesem Vergleichsversuch zwischen Schaumstoff-Folienverbunden wurden die Formteile unter Verwendung der folgenden Kaltschaumrezeptur (für eine Rohdichte = 40 kg/m$^3$) hergestellt :

Komponente A

100 Gew.-Teile eines auf Trimethylolpropan gestarteten Polypropylenglykols, das mit Ethylenoxid so modifiziert wurde, daß endständig > 80 % primäre Hydroxylgruppen bei einer OH-Zahl von 28 resultieren,

3,0 Gew.-Teile Wasser
0,6 Gew.-Teile Diazabicyclo (2.2.2) octan
0,2 Gew.-Teile Bis-dimethylaminoethylether
1,0 Gew.-Teile Glycerin
0,5 Gew.-Teile handelsüblicher Schaumstabilisator (Stabilisator KS 43 der BAYER AG Leverkusen)
15   Gew.-Teile Trichlorfluormethan

Komponente B

50 Gew.-Teile eines Isocyanates, bestehend aus

ca. 20 Gew.-%, 2,4'-Diphenylmethandiisocyanat
ca. 65 Gew.-%, 4,4'-Diphenylmethandiisocyanat und
ca. 15 Gew.-% polymerem MDI bei einem NCO-Gehalt von ca. 32,5 %.

Detailliertere Informationen bezüglich der allgemeinen Herstellung von PUR-Schaumstoffen sind dem Kunststoff-Handbuch, Band VII, herausgegeben von Becker und Braum, Carl Hanser Verlag München 1983 zu entnehmen (siehe Kapitel 5, insbesondere Seite 212 bis 235 und Seite 244 bis 245).

Ein ähnliches Bild zeigte sich beim Vergleich der Blasfolie nach dem erfindungsgemäßen Beispiel 1b mit dem Vergleichsversuch 2 : Die Folie nach dem erfindungsgemäßen Beispiel 1b zeigte eine gute Haftung (Einreißen des Schaumstoffs bei Trennversuchen) ; die Folie nach Vergleichsversuch 2 zeigte eine schlechte Haftung (Abziehbarkeit der Folie vom Schaumstoff).

Beispiel 4 (Vergleichsbeispiel)

In Analogie zu Beispiel 3b wurde ein konventionelles thermoplastisches Polyurethanelastomer vergleichbarer Shore-Härte hergestellt aus jeweils

50   Teilen Butandiol-1,4/Adipinsäurepolyester (OH-Zahl 52,7 ; Säurezahl : 0,9)
50   Teilen Hexandiol-1,6/Neopentylglykol/Adipinsäure-Mischpolyester (OH-Zahl 60,3 ; Säurezahl : 0,8)
8   Teilen Butandiol-1,4
0,8 Teilen Stearylamid

und jeweils den folgenden Diisocyanatmengen :

A) 34,31 Teilen 4,4'-Diisocyanatodiphenylmethan (NCO/OH = 0,98)
B) 34,66 Teilen 4,4'-Diisocyanatodiphenylmethan (NCO/OH = 0,99)
C) 35,01 Teilen 4,4'-Diisocyanatodiphenylmethan (NCO/OH = 1,00)
D) 35,36 Teilen 4,4'-Diisocyanatodiphenylmethan (NCO/OH = 1,01)
E) 35,71 Teilen 4,4'-Diisocyanatodiphenylmethan (NCO/OH = 1,02)

Es ließen sich nur die Einstellungen C) und D) mit befriedigender Homogenität zu klar-transparenten Blasfolien mit jedoch stark blockender Oberfläche verarbeiten, die in verarbeitungsfrischem Zustand stark verklebten.

Beispiel 5

a) Herstellung des Dispersionspolyols (Ausgangsmaterial)

Unter den Reaktionsbedingungen des Beispiels 1a wurde aus

100   Teilen linearem Polypropylenglykol (OH-Zahl 59,4),

2,33 Teilen 4,4'-Diaminodiphenylmethan und
2,94 Teilen 4,4'-Diisocyanatodiphenylmethan

ein bei Erwärmen bis mindestens 240 °C stabiles Dispersionspolyol mit folgenden Kenndaten erhalten :
Hydroxylzahl : 56,5
Viskosität (80 °C) : 345 mPa·s
Schmelzpunkt des Polyadduktes ≥ 260 °C
mittlere Teilchengröße : 3,37 μm
Feststoffgehalt : 5,0 % (bezogen auf die Mischung)
Stabilität der Polyolmischung bis ≥ 240 °C (5 Minuten Erwärmen als Test).

b) thermoplastisches Polyurethan (erfindungsgemäße Zusammensetzung)

In einer ersten Reaktionsstufe wurden 100 Teile Dispersionspolyol 5a) mit 95 Teilen 4,4'-Diisocyanato-diphenylmethan zu einem Prepolymeren mit 14,18 % NCO umgesetzt.
In einer zweiten Reaktionsstufe wurden auf einem Zweiwellen-Reaktionsextruder unter den in Beispiel 1b) genannten Bedingungen, jeweils

100 Teile Butandiol-1,4/Adipinsäure-Polyester (OH-Zahl 51,4 ; Säurezahl : 0,7)
25 Teile Butandiol-1,4
0,2 Teile 2,6-Ditertiärbutyl-4-methylphenol und
1,5 Teile Stearylamid mit jeweils

A) 188,00 Teilen des Prepolymeren (NCO/OH = 0,98)
B) 189,92 Teilen des Prepolymeren (NCO/OH = 0,99)
C) 191,84 Teilen des Prepolymeren (NCO/OH = 1,00)
D) 193,76 Teilen des Prepolymeren (NCO/OH = 1,01)

zu thermoplastischen Polyurethanen umgesetzt.

c) Verarbeitung zu Blasfolien (erfindungsgemäß)

Die Elastomeren 5b) lassen sich bei Produkttemperaturen von 200 bis 210 °C über den gesamten Dosierbereich A) bis D) zu homogenen, leicht matten, nichtblockenden, klebfreien, 50 μm-starken Blasfolien mit leicht körniger Oberfläche verarbeiten bzw. zu dünnwandigen Schläuchen mit 300 μm Wandstärke und blockfreier Oberfläche extrudieren (siehe Tabelle 4).

Tabelle 4

| Beispiel 5 | A | B | C | D |
|---|---|---|---|---|
| 100 % Modul (MPa) | 6,9 | 7,3 | 7,2 | 7,4 |
| 300 % Modul (MPa) | 13,0 | 12,5 | 13,6 | 15,2 |
| Zugfestigkeit (MPa) | 30,2 | 38,8 | 35,5 | 35,1 |
| Bruchdehnung (%) | 542 | 654 | 542 | 505 |
| Shore-Härte A | 88 | 87 | 88 | 87 |
| Shore-Härte D | 36 | 31 | 36 | 37 |
| Rückprallelastizität (%) | 36 | 35 | 36 | 35 |
| Gehalt an Polyaddukt (%) im PU-Elastomeren | ca. 1,57 | | | |

Beispiel 6 (Vergleichsbeispiel)

Analog Beispiel 5b) wurden zunächst 100 Teile Polypropylenglykol (OH-Zahl 59,4) und 95 Teile 4,4'-Diisocyanatodiphenylmethan zu einem Prepolymeren mit 14,07 % NCO umgesetzt. Anschließend wurden in zweiter Reaktionsstufe

A) 189,47 Teile des Prepolymeren (NCO/OH = 0,98)
B) 191,41 Teile des Prepolymeren (NCO/OH = 0,99)
C) 193,34 Teile des Prepolymeren (NCO/OH = 1,00)
D) 195,27 Teile des Prepolymeren (NCO/OH = 1,01)

mit jeweils

> 100 Teilen Butandiol-1,4/Adipinsäure-Polyester (OH-Zahl : 51,4 ; Säurezahl : 0,7),
> 25 Teilen Butandiol-1,4,
> 0,2 Teilen 2,6-Ditertiärbutyl-4-methylphenol und
> 2,2 Teilen Stearylamid

zu einem thermoplastischen Polyurethan mit einer Härte von 86 bis 88 Shore A bzw. 34 bis 36 Shore D umgesetzt. Es ließen sich lediglich die Einstellungen B) und C) mit ausreichender Homogenität zu klartransparenten, jedoch stark blockenden und im verarbeitungsfrischen Zustand miteinander verklebenden Folien oder Schläuchen verarbeiten.

## Beispiel 7

a) Dispersionspolyol

In Analogie zum Beispiel 1a) wurde ein bei Erwärmen bis mindestens 240 °C stabiles Dispersionspolyol aus

> 100 Teilen Butandiol-1,4/Adipinsäure-Polyester (OH-Zahl : 187,0 ; Säurezahl : 0,9),
> 1,37 Teilen 4,4'-Diaminodiphenylmethan und
> 1,73 Teilen 4,4'-Diisocyanatodiphenylmethan hergestellt.

Das Dispersionspolyol weist die OH-Zahl 181,4, die Säurezahl 0,8 und eine Viskosität bei 80 °C von 230 mPa.s auf. Der Feststoffgehalt beträgt 3,0 Gew.-% Polyharnstoff mit einer mittleren Teilchengröße von 0,74 μm. Bei 5-minütigem Erwärmen der Dispersion auf 240 °C bleibt diese stabil.

b) thermoplastisches, lineares Polyurethanelastomeres

Unter den Bedingungen des Beispiels 1b) wurden

> 100 Teile Dispersionspolyol 7a)
> 7 Teile Hexandiol-1,6
> 0,5 Teile Butandiol-1,4 und
> 0,5 Teile Stearylamid mit

> A) 56,28 Teilen 4,4'-Diisocyanatodiphenylmethan (NCO/OH = 0,99)
> B) 56,85 Teilen 4,4'-Diisocyanatodiphenylmethan (NCO/OH = 1,00)
> C) 57,42 Teilen 4,4'-Diisocyanatodiphenylmethan (NCO/OH = 1,01)

zu einem thermoplastischen, linearen Polyurethanelastomer mit folgenden Eigenschaften umgesetzt (siehe Tabelle 5).

### Tabelle 5

| Beispiel 7 | A | B | C |
|---|---|---|---|
| 100 % Modul (MPa) | 9,9 | 11,0 | 10,0 |
| 300 % Modul (MPa) | 21,4 | 24,4 | 24,2 |
| Zugfestigkeit (MPa) | 39,9 | 45,0 | 43,4 |
| Bruchdehnung (%) | 452 | 446 | 436 |
| Shore-Härte A | 91 | 91 | 91 |
| Shore-Härte D | 40 | 40 | 40 |
| Rückprallelastizität (%) | 27 | 26 | 25 |
| Gehalt an Polyaddukt (%) (im PU-Elastomeren) | ———— ca. 1,82 ———— | | |

c) Verarbeitung zu Kalanderfolien (erfindungsgemäß)

Alle drei Elastomer-Einstellungen ließen sich problemlos zu 125 μm starken Kalanderfolien mit

klebfreier, matter, nichtblockender Oberfläche und trockenem Griff verarbeiten. Die Produktschmelze ließ sich bei Verarbeitungstemperaturen von 180 bis 200 °C sehr gut von der Kalanderwalze abnehmen. Als Kalander wurde ein Walzenschmelzkalander der Fa. Maurer S.A., Bern (Schweiz) verwendet.

Beispiel 8

a) Dispersionspolyol

100 Teile Polytetramethylenglykol (OH-Zahl 113,5)
2,33 Teile 4,4'-Diaminodiphenylmethan und
2,94 Teile 4,4'-Diisocyanatodiphenylmethan

wurden entsprechend Beispiel 1a) zu einem bis mindestens 240 °C stabilen Dispersionspolyol mit folgenden Kenndaten umgesetzt :

OH-Zahl : 110,3
Viskosität (80 °C) : 690 mPa.s
mittlere Teilchengröße : 0,96 μm
Feststoffgehalt : 5,0 %

b) thermoplastisches, lineares Polyurethan

Entsprechend dem Beispiel 1b) wurden
100 Teile Dispersionspolyol 8a),
8 Teile Butandiol-1,4,
0,4 Teile Stearylamid und
0,2 Teile 2,6-Ditertiärbutyl-4-methylphenol mit

A) 46,35 Teilen 4,4-Diisocyanatodiphenylmethan (NCO/OH = 0,99)
B) 46,82 Teilen 4,4-Diisocyanatodiphenylmethan (NCO/OH = 1,00)
C) 47,28 Teilen 4,4-Diisocyanatodiphenylmethan (NCO/OH = 1,01)

zu einem thermoplastischen Polyurethan umgesetzt.

c) Verarbeitung zu Extrusionsschläuchen (erfindungsgemäß)

Alle drei Einstellungen ließen sich bei Materialtemperaturen von 180 bis 190 °C mit sehr guter Homogenität zu Schläuchen extrudieren oder zu Folien verblasen, die sich durch nichtblockende, klebfreie, matte Oberfläche auszeichneten und Wandstärken von 60 bzw. 300 μm aufwiesen. Die erhaltenen Polyurethanfolien hatten folgende Eigenschaften (siehe Tabelle 6) :

Tabelle 6

| Beispiel 8 | A | B | C |
|---|---|---|---|
| 100 % Modul (MPa) | 5,1 | 5,2 | 5,2 |
| 300 % Modul (MPa) | 9,8 | 10,1 | 11,7 |
| Zugfestigkeit (MPa) | 31,2 | 35,4 | 39,5 |
| Bruchdehnung (%) | 628 | 616 | 592 |
| Shore-Härte A | 82 | 82 | 82 |
| Shore-Härte D | 30 | 31 | 32 |
| Rückprallelastizität (%) | 44 | 44 | 43 |
| Polyadduktgehalt (%) (im PU-Elastomeren) | ca. 3,22 | | |

Beispiel 9

a) Dispersionspolyol

100 Teile Butandiol-1,4/Adipinsäure-Polyester (OH-Zahl 55,8 ; Säurezahl 0,8),
0,87 Teile Hydrazinhydrat und
4,39 Teile 4,4'-Diaminodiphenylmethan

wurden nach Vorschrift des Beispiels 1a) umgesetzt. Nach der Entwässerung bei 100 °C im Vakuum wurde ein Dispersionspolyol mit folgenden Kenndaten erhalten :

OH-Zahl : 53,2
Säure-Zahl : 0,8
Viskosität (80 °C) : 1 680 mPa.s
mittlere Teilchengröße : 0,88 μm
Feststoffgehalt : 5,0 Gew.-%.

Das Dispersionspolyol 9a) zeigte bei ca. 200 °C beginnende Zersetzung des Polyhydrazodicarbonamids und ergab ab ca. 240 °C eine klare Lösung.

b) thermoplastisches Polyurethan (weiche Einstellung)

100  Teile Dispersionspolyol 9a)
8  Teile Butandiol-1,4 und
0,3 Teile Stearylamid wurden mit

A) 33,57 Teilen 4,4'-Diisocyanatodiphenylmethan (NCO/OH = 0,98)
B) 33,92 Teilen 4,4'-Diisocyanatodiphenylmethan (NCO/OH = 0,99)
C) 34,26 Teilen 4,4'-Diisocyanatodiphenylmethan (NCO/OH = 1,00)
D) 34,60 Teilen 4,4'-Diisocyanatodiphenylmethan (NCO/OH = 1,01)

zu einem thermoplastischen, linearen Polyurethan (TPU) nach einem diskontinuierlichen batch-Gießverfahren umgesetzt, indem die Reaktionskomponenten jeweils eine Minute bei 100 °C intensiv vermischt, auf ein Blech gegossen und 30 Minuten bei 110 °C ausgeheizt wurden. Das erhaltene TPU hatte folgende Eigenschaften (siehe Tabelle 7).

Tabelle 7

| Beispiel 9 | A | B | C | D |
|---|---|---|---|---|
| 100 % Modul (MPa) | 7,5 | 8,1 | 8,5 | 7,9 |
| 300 % Modul (MPa) | 19,5 | 20,4 | 20,4 | 21,2 |
| Zugfestigkeit (MPa) | 38,1 | 43,0 | 41,6 | 40,5 |
| Bruchdehnung (%) | 525 | 506 | 583 | 576 |
| Shore-Härte A | 89 | 88 | 86 | 87 |
| Shore-Härte D | 40 | 38 | 38 | 40 |
| Rückprallelastizität (%) | 40 | 40 | 39 | 39 |
| Polyadduktgehalt (%) (im PU-Elastomeren) | ca. 3,50 | | | |

Alle Einstellungen ließen sich bei Materialtemperaturen von maximal 185 °C zu homogenen, 65 μm starken Blasfolien mit klebfreier, nichtblockender, matter Oberfläche und trockenem Griff verarbeiten. Der Dispersionsanteil war homogen, feinteilig verteilt und schwach trübe im Elastomeren vorliegend.

c) thermoplastisches Polyurethan - härtere Einstellung - (Vergleich)

100  Teile Dispersionspolyol 9a)
12  Teile Butandiol-1,4 und
0,3  Teile Stearylamid wurden analog Versuch 9b) mit

45,36 Teilen 4,4'-Diisocyanatodiphenylmethan (NCO/OH = 1,00) zu einen härteren Polyurethan mit 94 Shore A umgesetzt, welches eine Verarbeitungstemperatur von > 200 °C in der Produktschmelze erforderte. Unter diesen Bedingungen konnte aufgrund der thermischen Instabilität der Dispersion nur eine inhomogene Blasfolie mit unregelmäßig verteilten, wolkenförmigen Hartsegmentassoziationen erhalten werden. Das Dispersionspolyol 9a) ist somit nur für niedrigschmelzende TPU geeignet, da das Polyaddukt Ab) eine niedrige Zersetzungstemperatur aufweist.

Beispiel 10

a) Dispersionspolyol

In den auf 60° temperierten Stachelmischer gemäß Beispiel 1a wurden kontinuierlich pro Minute 1 919 g einer Mischung aus 119 g Butandiol-1,4 in 1 800 g Polypropylenglykol (OH-Zahl 59,4) und 330,4 g 4,4'-Diisocyanatodiphenylmethan eingespeist. Das austretende Reaktionsgemisch wurde in einem Verweilzeitgefäß drei Stunden bei 80 °C nachgerührt. Dabei bildete sich eine bis 230 °C stabile Dispersion mit folgenden Kenndaten :

Hydroxylzahl : 48,0
Viskosität (80 °C) : 510 mPa.s
mittlere Teilchengröße : 4,42 μm
Feststoffgehalt : 20 %

b) thermoplastisches, lineares Polyurethanelastomeres

Ein wie in Beispiel 5b) in erster Reaktionsstufe hergestelltes Prepolymer (14,18 %NCO) aus 25 Teilen Dispersionspolyol 10a), 75 Teilen Polypropylenglykol (OH-Zahl 59,4) und 95 Teilen 4,4'-Diisocyanatodiphenylmethan, wurde in Mengen von

A) 188,00 Teilen (NCO/OH = 0,98) bzw.
B) 189,92 Teilen (NCO/OH = 0,99) bzw.
C) 191,84 Teilen (NCO/OH = 1,00) bzw.
D) 193,76 Teilen (NCO/OH = 1,01)

mit jeweils

100  Teilen Butandiol-1,4/Adipinsäure-Polyester (OH-Zahl 51,4 ; Säurezahl : 0,7)
 25  Teilen Butandiol-1,4,
  1,5 Teilen Stearylamid und
  0,2 Teilen 2,6-Ditertiärbutyl-1-methylphenol

bei 100 °C eine Minute intensiv vermischt, auf Bleche gegossen und jeweils 30 Minuten bei 110 °C zu einem thermoplastischen Polyurethan mit den nachfolgend aufgeführten Eigenschaften ausgehärtet, welches sich über den gesamten Dosierbereich bei Verarbeitungstemperaturen von 190 bis 200 °C zu homogenen, leicht matten, nichtblockenden, klebfreien Blasfolien mit leicht gekörnter Oberfläche und 80 μm Wandstärke verarbeiten bzw. zu dünnwandigen, 300 μm starken Schläuchen extrudieren ließ. Eigenschaften der Folien siehe die folgende Tabelle 8 :

Tabelle 8

| Beispiel 10 | A | B | C | D |
|---|---|---|---|---|
| 100 % Modul (MPa) | 9,3 | 10,2 | 10,2 | 10,2 |
| 300 % Modul (MPa) | 14,4 | 16,8 | 17,9 | 18,7 |
| Zugfestigkeit (MPa) | 27,0 | 31,7 | 31,0 | 31,6 |
| Bruchdehnung (%) | 615 | 598 | 592 | 578 |
| Shore-Härte A | 91 | 91 | 90 | 89 |
| Shore-Härte D | 35 | 35 | 35 | 36 |
| Rückprallelastizität (%) | 39 | 38 | 37 | 37 |
| Polyadduktgehalt (%) (im PU-Elastomeren) | ca. 1,54 | | | |

Beispiel 11

Unter den Bedingungen des Beispiels 10a) wurden pro Minute 2131 g Polypropylenglykol (OH-Zahl 55,3) mit einem Wassergehalt von 5 % und 119 g 4,4'-Diisocyanatodiphenylmethan umgesetzt. Das den Stachelmischer verlassende Reaktionsgemisch wurde 30 Minuten bei 60 °C bis zur beendeten $CO_2$-Entwicklung nachgerührt. Nach Abzug des überschüssigen Wassers bei 100 °C im Vakuum wurde eine feinteilige, bis mindestens 240 °C stabile, homogene Dispersion mit folgenden Kenndaten erhalten :

OH-Zahl : 52,4

Viskosität (80 °C) : 320 mPa.s

mittlere Teilchengröße : 2,67 µm

Stabilität der Polyharnstoffdispersion : bis > 240 °C.

Feststoffgehalt ca. 5 %.

Dieses Dispersionspolyol entsprach weitgehend dem des Beispiels 5a und ließ sich analog zu einem dem Beispiel 5b) vergleichbaren thermoplastischen, matten, linearen Polyurethan umsetzen, das sich gleichartig verarbeiten ließ.

## Beispiel 12 (Vergleichsbeispiel)

### a) Dispersionspolyol

100 Teile Butandiol-1,4/Adipinsäure-Polyester (OH-Zahl 51,4 ; Säurezahl 0,7),
2,17 Teile 2,4-Toluylendiamin und
3,09 Teile Toluylendiisocyanat (80 % 2,4- und 20 % 2,6-Isomer)

werden nach der Vorschrift des Beispiels 1a) zu folgendem Dispersionspolyol umgesetzt :

OH-Zahl : 49,4

Säurezahl : 0,6

Viskosität (100 °C) : 5470 mPa.s

mittlere Teilchengröße : 0,35 µm

Feststoffgehalt : 5,0 %

Die Dispersion geht oberhalb 190 °C in eine Emulsion über (Schmelzen bzw. Zersetzen des dispergierten Polyharnstoffanteils).

### b) thermoplastisches, lineares Polyurethan

50,0 Teile Dispersionspolyol 12a)
50,0 Teile Butandiol-1,4/Adipinsäure-Polyester (OH-Zahl 51,4/Säurezahl : 0,7),
8,0 Teile Butandiol-1,4 und
0,3 Teile Stearylamid wurden analog Beispiel 9b) mit
33,6 Teilen 4,4'-Diisocyanatodiphenylmethan (NCO/OH = 1,00)

zu einem thermoplastischen Polyurethan umgesetzt, welches bei einer erforderlichen Verarbeitungstemperatur von 195 °C in der Schmelze zu einer inhomogenen Blasfolie mit unregelmäßigen Hartsegmentagglomerationen führte. Das Dispersionspolyol 12a) ist wegen der zu niedrigen Erweichungspunkte seines Produkts bzw. evtl. auch zu niedrigen Thermostabilität für die vorstehende Polyurethanrezeptur ungeeignet.

## Beispiel 13

### a) Dispersionspolyol

50 Teile Butandiol-1,4/Adipinsäure-Polyester (OH-Zahl 52,7 ; Säurezahl 0,9),
50 Teile Hexandiol-1,6/Neopentylglykol (Molverhältnis 65/35)/Adipinsäure-Mischpolyester (OH-Zahl 60,3 ; Säurezahl 0,8),
2,15 Teile Hexamethylendiamin und
3,11 Teile Hexamethylendiisocyanat

werden nach der Vorschrift des Beispiels 1a) zu einem Dispersionspolyol mit folgenden Kenndaten umgesetzt :

OH-Zahl : 53,9

Säurezahl : 0,7

Viskosität (80 °C) : 3270 mPa.s

mittlere Teilchengröße : 0,63 µm

Feststoffgehalt : 5,0 %

Die Dispersion ist bis 240 °C thermostabil und beginnt oberhalb 250 °C auszuflocken.

### b) thermoplastisches, lineares Polyurethan

100 Teile Dispersionspolyol 13a)
8 Teile Butandiol-1,4 und

0,3 Teile Stearylamid wurden mit
34,39 Teilen 4,4'-Diisocyanatodiphenylmethan (NCO/OH = 1.00)

entsprechend Beispiel 9b) zu einem thermoplastischen Polyurethan mit den nachfolgenden angegebenen Eigenschaften umgesetzt.

| | |
|---|---:|
| 100 % Modul (MPa) | 6,0 |
| 300 % Modul (MPa) | 17,0 |
| Zugfestigkeit (MPa) | 46,9 |
| Bruchdehnung (%) | 423 |
| Shore-Härte A | 81 |
| Shore-Härte D | 32 |
| Rückprallelastizität (%) | 42 |
| Polyadduktgehalt (%) | 3,50 |

Das erhaltene TPU ließ sich bei einer Produkttemperatur von 205 °C zu einer Blasfolie (Wandstärke von 60 µm) mit matter, nichtblockender und klebfreier Oberfläche verarbeiten.

**Beispiel 14 (Vergleichsbeispiel)**

a) Dispersionspolyol

Nach der Vorschrift des Beispiels 1a wurde aus

50    Teilen Butandiol-1,4/Adipinsäurepolyester (OH-Zahl 52,7 ; Säurezahl 0,9),
50    Teilen Hexandiol-1,6/Neopentylglykol/Adipinsäure-Mischpolyester (OH-Zahl 60,3 ; Säurezahl 0,8),
2,28 Teilen Isophorondiamin und
2,98 Teilen Isophorondiisocyanat

ein Dispersionspolyol mit folgenden Kenndaten hergestellt :
OH-Zahl : 54,1
Säurezahl : 0,8
Viskosität (80 °C) : 2050 mPa.s
mittlere Teilchengröße : 0,78 µm
Feststoffgehalt : 5,0 %
Die Dispersion ist bis 240 °C stabil ; ab 250 °C bildet sich unter Zersetzungserscheinung (Gasen) eine klare Lösung.

b) thermoplastisches Polyurethan

100    Teile Dispersionspolyol 14a)
8,35 Teile Butandiol-1,4
0,3  Teile Stearylamid und
35,43 Teile 4,4'-Diisocyanatodiphenylmethan (NCO/OH = 1,00)

wurden analog Beispiel 9b) zu einem thermoplastischen Polyurethan mit folgenden Eigenschaften umgesetzt :

| | |
|---|---:|
| 100 % Modul (MPa) | 5,2 |
| 300 % Modul (MPa) | 14,0 |
| Zugfestigkeit (MPa) | 42,9 |
| Bruchdehnung (%) | 459 |
| Shore-Härte A | 81 |
| Shore-Härte D | 33 |
| Rückprallelastizität (%) | 41 |
| Polyadduktgehalt (%) | 3,47 |

c) Verarbeitung zu Blasfolien

Aus diesem TPU bei 205 °C Produkttemperatur erhaltene Folien wiesen zwar homogene, jedoch klar-transparente, blockende Oberflächen auf. Aufgrund der Löslichkeit der Polyharnstoffdispersion in der TPU-Schmelze ist das Dispersionspolyol 14a) in der vorliegenden Polyurethanrezeptur erfindungsgemäß nicht brauchbar.

# 0 195 899

## Patentansprüche

1. Verfahren zur Herstellung von matten, nichtblockenden, dünnwandigen Formkörpern, Folien oder Schläuchen, indem man thermoplastisch verarbeitbare Polyurethanelastomere mit im wesentlichen linearem Aufbau auf Basis von

A) Verbindungen mit mehreren gegenüber Isocyanat reaktiven Gruppen mit Zerewitinoff-aktiven H-Atomen und einem Molekulargewicht von 400 bis 10 000 sowie Schmelzpunkten unter 60 °C,

B) zwei Zerewitinoff-aktive Wasserstoffatome aufweisenden Kettenverlängerungsmitteln mit einem Molekulargewicht von 18 bis 399,

C) Diisocyanaten, sowie

D) gegebenenfalls Aktivatoren, Stabilisatoren, Gleitmitteln und weiteren, an sich bekannten Zusatzstoffen,

wobei das molare Verhältnis von Isocyanatgruppen zur Summe aller Zerewitinoff-aktive Wasserstoffatome aufweisenden Gruppen 0,95 bis 1,05 beträgt, nach dem Extrusions-, Blasfolien- oder Kalandrierverfahren bei Verarbeitungstemperaturen von oberhalb 110 °C in dünnwandige, matte Formkörper, Folien oder Schläuche mit Wandstärken unter 2 mm überführt, dadurch gekennzeichnet, daß ein Polyurethanelastomer verwendet wird, bei dessen Herstellung eine Komponente A) eingesetzt wurde, die eine feinteilige Dispersion von Polyisocyanat-Polyadditionsprodukten Ab) aus

α) mindestens zwei Zerewitinoff-aktive Wasserstoffatome aufweisenden Verbindungen vom Molekulargewicht 18 bis 399 und

β) organischen Di- und/oder Polyisocyanaten,

im Molverhältnis NCO/aktivem Wasserstoff von 0,8 : 1 bis 1,3 : 1 mit einer mittleren Teilchengröße der Polyadditionsprodukte Ab) von 0,01 bis 25 μm in einer zwei Zerewitinoff-aktive H-Atome aufweisenden Verbindung Aa) darstellt, wobei die dispergierten Polyadditionsprodukte Ab)

(i) Schmelzpunkte > 220 °C aufweisen,

(ii) in der Komponente Aa) mindestens bis 15 °C oberhalb der Verarbeitungstemperatur der thermoplastischen Polyurethanelastomeren, ohne sich zu zersetzen oder zu lösen, stabil und feinteilig verteilt bleiben, und

(iii) sich bei der Verarbeitungstemperatur in dem thermoplastischen Polyurethanelastomeren nicht zersetzen oder lösen,

und wobei die Menge der Polyaddukte Ab) 0,66 bis 15 Gew.-%, bezogen auf das polyaddukt-haltige Polyurethanelastomere, beträgt.

2. Verfahren nach Anspruch 1, dadurch gekennzeichnet, daß bei den Polyaddukten Ab) mindestens eine der Komponenten, d. h. entweder das Kettenverlängerungsmittel bzw. der Vernetzer α) oder das Diisocyanat β) symmetrisch aufgebaut ist.

3. Verfahren nach Ansprüchen 1 und 2, dadurch gekennzeichnet, daß in den Polyaddukten Ab) eine der Komponenten, d. h. entweder das Diisocyanat β) oder das Kettenverlängerungsmittel bzw. der Vernetzer α), symmetrisch aufgebaut ist.

4. Verfahren nach Ansprüchen 1 bis 3, dadurch gekennzeichnet, daß mindestens eine der Komponenten der höhermolekularen, hochschmelzenden Polyaddukte Ab) von den Kettenverlängerungsmitteln B) oder von den bei der Herstellung der Polyurethanelastomeren eingesetzten Diisocyanaten C) verschieden ist.

5. Verfahren nach Ansprüchen 1 bis 4, dadurch gekennzeichnet, daß in den Polyaddukten Ab) sowohl symmetrische Diisocyanate β) als auch symmetrische Verbindungen mit reaktiven Wasserstoffatomen (α) verwendet werden.

6. Verfahren nach Ansprüchen 1 bis 5, dadurch gekennzeichnet, daß die Polyaddukte Ab) aus symmetrischen, aromatischen Diisocyanaten und symmetrischen Diaminen oder Wasser, besonders bevorzugt aus symmetrischen aromatischen Diisocyanaten und symmetrischen aromatischen Diaminen aufgebaut sind.

7. Verfahren nach Ansprüchen 1 bis 6, dadurch gekennzeichnet, daß die Polyaddukte aus Diphenylmethan-4,4'-diisocyanat und Diphenylmethan-4,4'-diamin oder aus Diphenylmethan-4,4'-diisocyanat und Wasser aufgebaut sind.

8. Verfahren nach Ansprüchen 1 bis 7, dadurch gekennzeichnet, daß die Polyaddukte Ab) aus symmetrischen Diisocyanaten und symmetrischen Diolen, insbesondere Alkylendiolen $HO-(-CH_2-)_n-OH$ (n = 2, 4, 6, 8, 10, 12), 1,4-Bis-hydroxymethyl-cyclohexan, Hydrochinon-bis-(β-hydroxyethyl)-ether oder Terephthalsäure-bis-(β-hydroxyethyl)-ester, aufgebaut sind.

9. Verwendung der nach Ansprüchen 1 bis 8 erhältlichen nichtblockenden, matten, dünnwandigen Formkörper, Folien und Schläuche zur Herstellung von Polyurethanschaumstoff-Verbundkörpern.

## Claims

1. A process for the production of matte-finish, non-blocking, thin-walled mouldings, films or tubes

20

by converting a thermoplastically processible polyurethane elastomer of substantially linear structure based on

A) compounds containing several isocyanate-reactive groups with zerewitinoff-active H atoms and having a molecular weight of 400 to 10,000 and melting points below 60 °C,

B) chain-extending agents containing two zerewitinoff-active hydrogen atoms and having a molecular weight of 18 to 399,

C) diisocyanates and

D) optionally activators, stabilizers, lubricants and other additives known per se,

the molar ratio of isocyanate groups to the sum of all groups containing zerewitinoff-active hydrogen atoms being 0.95 to 1.05, into thin-walled, matte-finish mouldings, films or tubes having wall thicknesses below 2 mm by the extrusion, blown-film or calendering technique at processing temperatures above 110 °C, characterized in that the polyurethane elastomer used is produced using a component A in the form of a finely divided dispersion of polyisocyanate polyaddition products Ab) of

α) compounds containing at least two zerewitinoff-active hydrogen atoms and having a molecular weight of 18 to 399 and

β) organic di- and/or polyisocyanates

in a molar ratio of NCO to active hydrogen of 0.8 : 1 to 1.3 : 1 and with a mean particle size of the polyaddition products Ab) of from 0.01 to 25 μm, in a compound containing two zerewitinoff-active hydrogen atoms, the dispersed polyadditions products Ab)

(i) having melting points above 220 °C,

(ii) remaining stable and finely dispersed in component Aa) at least up to 15 °C above the processing temperature of the thermoplastic polyurethane elastomer without decomposing or dissolving and

(iii) neither decomposing nor dissolving in the thermoplastic polyurethane elastomer at the processing temperature,

and the quantity of the polyadducts Ab) amounting to between 0.66 and 15 % by weight, based on the polyadduct-containing polyurethane elastomer.

2. A process as claimed in claim 1, characterized in that, in the polyadducts Ab), at least one of the components i.e. either the chain-extending agent or the crosslinking agent α) or the diisocyanate β), is symmetrical in structure.

3. A process as claimed in claims 1 and 2, characterized in that, in the polyadducts Ab), one of the components, i.e. either the diisocyanate β) or the chain-extending agent or the crosslinking agent α), is symmetrical in structure.

4. A process as claimed in claims 1 to 3, characterized in that at least one of the components of the relatively high molecular weight, high-melting polyadducts Ab) is different from the chain-extending agents B) or from the diisocyanates C) used in the production of the polyurethane elastomers.

5. A process as claimed in claims 1 to 4, characterized in that both symmetrical diisocyanates β) and symmetrical compounds containing reactive hydrogen atoms α) are used in the polyadducts Ab).

6. A process as claimed in claims 1 to 5, characterized in that the polyadducts Ab) are synthesized from symmetrical, aromatic diisocyanates and symmetrical diamines or water and preferably from symmetrical aromatic diisocyanates and symmetrical aromatic diamines.

7. A process as claimed in claims 1 to 6, characterized in that the polyadducts are synthesized from diphenylmethane-4,4'-diisocyanate and diphenylmethane-4,4'-diamine or from diphenylmethane-4,4'-diisocyanate and water.

8. A process as claimed in claims 1 to 7, characterized in that the polyadducts Ab) are synthesized from symmetrical diisocyanates and symmetrical diols, more especially alkylene diols HO—(—CH$_2$—)$_n$—OH (n = 2, 4, 6, 8, 10, 12), 1,4-bis-hydroxymethyl cyclohexane, hydroquinone-bis-(β-hydroxyethyl)-ether or terephthalic acid-bis-(β-hydroxyethyl)-ester.

9. The use of non-blocking, matte-finish, thin-walled mouldings, films and tubes obtainable in accordance with claims 1 to 8 for the production of polyurethane foam composites.

**Revendications**

1. Procédé pour produire des objets moulés, des feuilles et des tubes souples, mats, ne présentant pas d'adhérence accidentelle, à paroi mince, selon lequel on transforme, selon le procédé par extrusion, par formation de feuilles soufflées ou par calandrage, à des températures de transformation supérieures à 110 °C, en des objets moulés mats, à paroi mince, en des feuilles ou tubes souples ayant des épaisseurs de paroi inférieures à 2 mm, des polyuréthannes élastomères, transformables par voie thermoplastique et ayant une structure essentiellement linéaire, à base

A) de composés comportant plusieurs groupes, pouvant réagir avec les isocyanates, ayant des atomes de H actifs selon Zerewitinoff et présentant un poids moléculaire de 400 à 10 000, ainsi que des points de fusion inférieurs à 60 °C,

B) d'agents, présentant 2 atomes d'hydrogène à activité de Zerewitinoff, d'allongement des chaînes, ayant un poids moléculaire de 18 à 399,

C) de diisocyanates, ainsi que,

D) éventuellement d'activateurs, de stabilisants, de lubrifiants et d'autres additifs connus en eux-mêmes,

le rapport molaire des groupes isocyanates à la somme de tous les groupes présentant des atomes d'hydrogène à activité de Zerewitinoff étant de 0,95 à 1,05, procédé caractérisé en ce qu'on utilise un polyuréthanne élastomère, pour la production duquel on a utilisé un composant A), qui constitue une dispersion en fines particules de produits Ab) de polyaddition de polyisocyanates, obtenue à partir

α) de composés à poids moléculaire compris entre 18 et 399 et présentant au moins deux atomes d'hydrogène à activité selon Zerewitinoff, et

β) de diisocyanates et/ou de polyisocyanates organiques,

selon un rapport molaire NCO/hydrogène actif de 0,8 : 1 à 1,3 : 1, le produit Ab) de polyaddition ayant une grosseur moyenne des particules de 0,01 à 25 μm, dans un composé Aa) présentant 2 atomes de H actif selon Zerewitinoff, les produits dispersés de polyaddition Ab)

(i) présentant des points de fusion supérieurs à 220 °C,

(ii) demeurant stables, et répartis en fines particules dans le composant Aa) au moins jusqu'à 15 °C au-delà de la température de transformation du polyuréthanne élastomère thermoplastique, sans se décomposer ni se dissoudre, et

(iii) ne se décomposant pas ou ne se dissolvant pas à la température de mise en œuvre dans le polyuréthanne élastomère thermoplastique obtenu,

la proportion du produit Ab) de polyaddition représentant 0,66 à 15 % en poids, par rapport au polyuréthanne élastomère contenant le produit de polyaddition.

2. Procédé selon la revendication 1, caractérisé en ce que, dans les produits Ab) de polyaddition, au moins l'un des composants, c'est-à-dire soit l'agent d'allongement des chaînes ou l'agent de réticulation α), soit le diisocyanate β), a une structure symétrique.

3. Procédé selon les revendications 1 et 2, caractérisé en ce que, dans les produits Ab) de polyaddition, l'un des composants, c'est-à-dire soit le diisocyanate β), soit l'agent d'allongement des chaînes ou l'agent de réticulation α), a une structure symétrique.

4. Procédé selon les revendications 1 à 3, caractérisé en ce qu'au moins l'un des composants du produit Ab) de polyaddition à poids moléculaire élevé, à point élevé de fusion, est différent des agents B) d'allongement des chaînes ou des diisocyantes C) utilisés pour la production des polyuréthannes élastomères.

5. Procédé selon les revendications 1 à 4, caractérisé en ce qu'on utilise, dans les produits Ab) de polyaddition, aussi bien des diisocyanates β) symétriques que des composés symétriques α) comportant des atomes d'hydrogène réactifs.

6. Procédé selon les revendications 1 à 5, caractérisé en ce que les produits Ab) de polyaddition sont formés à partir de diisocyanates aromatiques symétriques et de diamines symétriques ou d'eau, de façon particulièrement préférée, de diisocyanates aromatiques symétriques et de diamines aromatiques symétriques.

7. Procédé selon les revendications 1 à 6, caractérisé en ce que les produits de polyaddition sont constitués à partir du 4,4'-diphénylméthane et de la diphénylméthane-4,4'-diamine ou à partir du 4,4'-diisocyanate de diphénylméthane et d'eau.

8. Procédé selon les revendications 1 à 7, caractérisé en ce que les produits Ab) de polyaddition sont obtenus à partir de diisocyanates symétriques et de diols symétriques, en particulier des alkylènediols $HO-(-CH_2-)_n-OH$ (n valant 2, 4, 6, 8, 10, 12), du 1,4-bis-hydroxyméthyl-cyclohexane, de l'éther-oxyde de bis-(β-hydroxyéthyle) de l'hydroquinone ou du téréphtalate de bis-(β-hydroxyéthyle).

9. Utilisation des objets moulés, feuilles et tubes souples ne présentant pas d'adhérence accidentelle, mats, à paroi mince, que l'on peut obtenir selon les revendications 1 à 8, pour fabriquer des objets stratifiés comportant de la mousse de polyuréthanne.